# EUROPEAN PATENT APPLICATION

(11) **EP 4 483 983 A1**
(43) Date of publication of application: **01.01.2025**
(21) Application number: 24184138.6
(22) Date of filing: 24.06.2024
(51) Int. Cl.: B01D 29/27, B01D 35/02, B01D 35/147, B01D 36/00, C02F 1/00, C02F 103/42

(54) **FILTERING UNIT**

(30) Priority: 25.06.2023 IL 30402723
(71) Applicant: Maytronics Ltd., 1935000 Kibbutz Yizrael (IL)
(72) Inventor: Amsalem, Eliav, 1935000 Kibutz Yizrael (IL); Zfadia, Tzachi, 1935000 Kibutz Yizrael (IL); Grubman, Igor, 1935000 Kibutz Yizrael (IL)
(74) Representative: Kasche & Partner

(57) **Abstract**

A detachable filtering unit that includes (a) a filter bag; (b) at least one interior supporting element (ISE) that is configured to contact one or more interior regions of the filter bag and to support the filter bag; and (c) a filtering unit base that comprises an ISE interface, a fluid opening; wherein the at least one ISE is configured to be detachable coupled to the ISE interface

## Description

### CROSS REFERENCE

This application claims priority from Israeli patent application serial number 304027 filing date 25 June 2023, which is incorporated herein in its entirety.

### BACKGROUND

Various pool related platforms perform fluid filtering operations.

There is a growing need to provide effective filtering units and to provide filtering units that are easy to empty.

### SUMMARY

There may be provided a detachable filtering unit.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1 illustrates an exploded view of an example of a detachable filtering unit;
FIG. 2 illustrates an example of different steps of an assembly of a filtering unit base;
FIG. 3 illustrates an example of different steps of an assembly of a detachable filtering unit;
FIG. 4 illustrates an example of different steps of an insertion of the detachable filtering unit into a PCR;
FIG. 5 illustrates an example of filtering unit base;
FIG. 6 illustrates an example of detachable exterior cage;
FIG. 7 illustrates an example of valve closing element that may be two side axes, spring and valve base;
FIG. 8 illustrates an example of an experimental set up that includes a pool cleaning robot and an detachable exterior cage; and
FIG. 9 illustrates an example of a filtering bag.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DESCRIPTION OF THE PREFERRED EMBODIMENTS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The subject matter regarded as the invention is particularly pointed out and distinctly claimed in the Summary of the invention of the specification.

The invention, however, both as to organization and method of operation, together with objects, features, and advantages thereof, may best be understood by reference to the following detailed description when read with the accompanying drawings.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

The term "and/or" is additionally or alternatively.

The terms "control unit", "remote control device", "control device" and "mobile computer" are used in an interchangeable manner.

Any reference in the specification to a pool cleaning robot should be applied mutatis mutandis to a method that can be executed by the pool cleaning robot and to a computer readable medium that stores instructions to be executed by the pool cleaning robot.

Any reference in the specification to a mobile computer should be applied mutatis mutandis to a method that can be executed by the mobile computer and to a computer readable medium that stores instructions to be executed by the mobile computer.

Any reference in the specification to method should be applied mutatis mutandis to a pool cleaning robot and/or to a mobile computer that execute the method and/or to a computer readable medium that stores instructions that once executed result in an execution of the method.

Any reference in the specification to a non-transitory computer readable medium should be applied mutatis mutandis to a pool cleaning robot and/or a mobile computer capable of executing the instructions stored in the non-transitory computer readable medium and should be applied mutatis mutandis to method that may be executed by a pool cleaning robot and/or a mobile computer that reads the instructions stored in the non-transitory computer readable medium.

Because the illustrated embodiments of the present invention may for the most part, be implemented using electronic components, touch screens and circuits known to those skilled in the art, details will not be explained in any greater extent than that considered necessary as illustrated above, for the understanding and appreciation of the underlying concepts of the present invention and in order not to obfuscate or distract from the teachings of the present invention.

Any reference in the specification to a method should be applied mutatis mutandis to a system capable of executing the method and should be applied mutatis mutandis to a non-transitory computer readable medium that stores instructions that once executed by a computer result in the execution of the method.

A PRP is any platform that may perform an operation related to a liquid of a pool - cleaning, changing chemical composition, monitoring, and the like. Examples of a PRP include a pool robot that differs from a pool cleaning robot (PCR), a PCR, a floating unit, a skimmer, and the like. Any example related a PCR may be applied mutatis mutandis, to any other PRP.

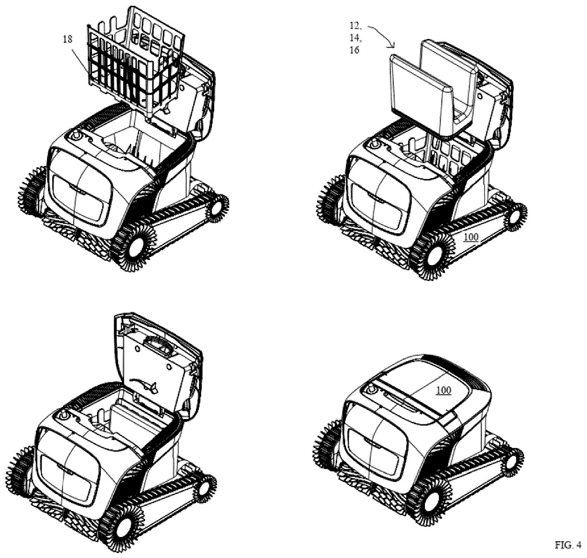

For simplicity of explanation figure 4 illustrates a PCR that is a pool cleaning robot.

There may be provided a detachable filtering unit. The detachable filtering unit may be positioned at least partially within a PCR and may filter fluid. The detachable filtering may be detached from the PCR - for example for cleaning purposes.

The detachable filtering unit may include:
a. A filter bag (used for filtering fluid).
b. At least one interior supporting element (ISE) that may be configured to contact one or more interior regions of the filter bag and to support the filter bag.
c. A filtering unit base that may include an ISE interface, a fluid opening,; wherein the at least one ISE may not configured to be detachable coupled to the ISE interface.

The detachable filtering unit may also include a detachable exterior cage that at least partially surround the filter bag, once the detachable filtering unit is assembled. The detachable exterior cage may protect a person from moving elements of the PCR (such as rotors and/or impellers) and may delimit the expansion of the filtering bag within the PCR, and may be used for moving the filter bag - into the PCR and/or outside the PCR.

The detachable exterior cage may have a lower opening. A bottom of the filtering unit base may not be configured to pass through the lower opening, when the detachable filtering unit is assembled. This may prevent the bottom of the filtering unit base from falling through the lower opening.

The detachable exterior cage may include perforated sidewalls. This reduces the weight and/or cost of the detachable exterior cage, may increase the elasticity of the detachable exterior cage and/or may simplify the catching of the detachable exterior cage - for example when removing the detachable filtering unit from the PCR and/or when moving the detachable filtering unit outside the PCR. The perforated sidewalls also facilitate a free flow of fluid within the robot.

The detachable exterior cage may include at least one exposed handle. An exposed handle may not contact the filter bag, when the detachable filtering unit surrounds the filter bag and the filter bag is at least half empty. The exposed handle may contact the filter bag or not contact the filter bag in one or more situations.

The at least one ISE may include ISEs that are configured to support interior regions located at a top of the filter bag.

The ISEs may be located at opposite sides of the filtering unit base, wherein each ISE of the ISEs has an upper bar that may be supported by additional bars.

The each ISE may include ISE adaptors that are detachable coupled to the ISE interface,

An ISE adaptor may include two parts that are rotatably coupled to each other and a protrusion that may be oriented in relation to a longitudinal axis of the ISE adaptor.

The a bottom of the filtering unit base may be shaped as a trapezoid having rounded corners and wherein the ISE interface may include multiple ISE interface elements located in proximity to the rounded corners.

The filter bag may be made of woven fabric.

The filter bag may include a filter bag opening and a filter bag closing element for selectively closing the filter bag opening.

The filter bag closing element be at least one of a mechanical elements, a magnetic element, and the like. For example - may be a zipper or a double sided adhesive tape.

The filtering unit base may include a valve for selectively closing the fluid opening. Alternatively - the valve is positioned between the filtering unit base and the fluid opening without belong to the filtering unit base.

The value may include a valve closing element, a spring, and a value base, wherein the closing element may be rotatably coupled to the fluid base. The spring may be configured to move the closing element to a closed position, and maintain the closing element at the closed position while an opening pressure applied on the closing element does not exceed a predefined opening pressure level.

The filter bag may include one or more air extraction openings. This enables air to exit the filter bag when the PCR descends into the fluid of the pool.

The filter bag may be made of any fabric- a woven fabric or a non-woven fabric.

The filter bag may be made of a recycled material or of a non-recycled material.

According to an embodiment, the detachable filtering unit is shaped and sized for being mounted from a top of the PCR.

According to an embodiment, the detachable exterior cage is configured to protect a person from moving elements within the PCR during a positioning of the detachable filtering unit within an inner space of the PCR.

According to an embodiment, the detachable exterior cage is configured to delimit the expansion of the filtering bag within the PCR.

According to an embodiment, the detachable exterior cage is not used for filtering.

According to an embodiment, the detachable exterior cage includes perforated sidewalls and the openings that form the perforated sidewalls are much bigger (for example by a factor of at least 20, 50, 100 and even more) than the filtering openings of the filter bag (and corresponding to the size of particles to be filtered by the filtering unit).

According to an embodiment, the detachable exterior cage is not a part of a filtering unit of the PCR.

According to an embodiment, the detachable filtering unit is configured to emulate a detachable filtering unit cartridge - for example by having a rigid frame exterior (such as two ISEs 14 and filtering unit base 16) - and/or by having handles and a detachable exterior cage that is at least partially rigid.

According to an embodiment, the detachable exterior cage is configured to be installed within an inner space of the PCR independently from other components of the detachable filtering unit.

According to an embodiment, the detachable exterior cage consists essentially of a perforated body that has openings of size that are at least 20 times a size of filtering openings of the filtering unit.

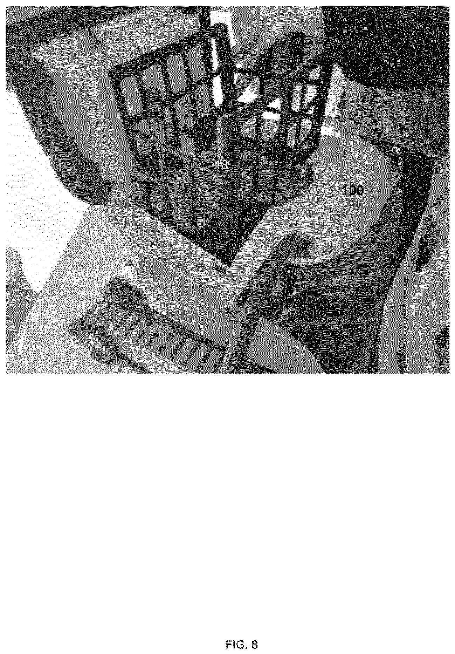

The PCR is denoted 100 in figures 4 and 8. The detachable filtering unit is denoted 10 in various figures.

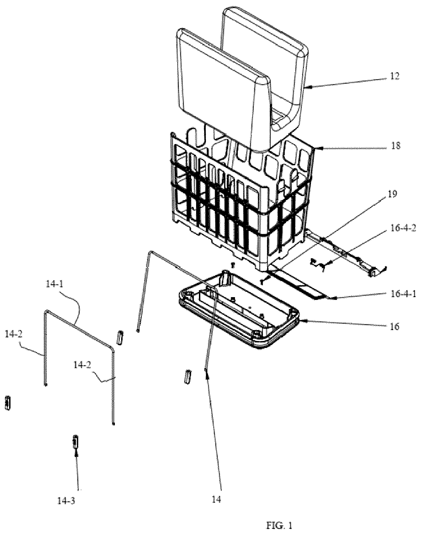

Figure 1 illustrates an exploded view of an example of a detachable filtering unit 10 that includes filter bag 12, filtering unit base 16, and two ISEs 14.

Figure 1 also includes detachable exterior cage 18 that may belong to the detachable filtering unit or may not belong to it. Figure 1 also illustrates components such as upper bar 14-1, supporting bars 14-2, ISE adaptor 14-3, valve closing element 16-4-1, and spring 16-4-2.

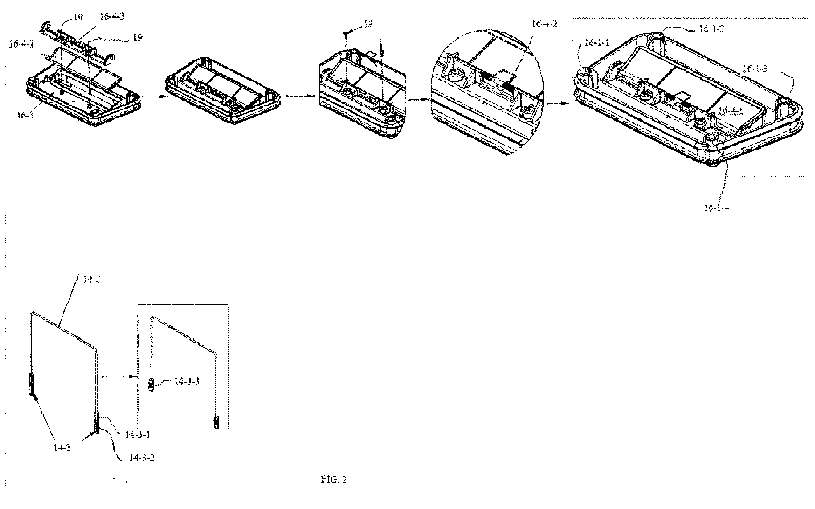

Figure 2 illustrates an example of different steps (from left to right) of an assembly of a filtering unit base 16. The valve base 16-4-3 is connected (using fastening elements 19) to the bottom 16-3 (of filtering unit base 16), and the valve closing element 16-4-3 (of valve 16-4) is connected to the valve base 16-4-3. Figure 2 illustrates the filtering unit base 16 that is shaped as a trapezoid having rounded corners, and including an ISE interface that includes multiple ISE interface elements 16-1-1, 16-1-2, 16-1-3 and 16-1-4 that are located in proximity to the rounded corners.

Figure 2 also illustrates a first part 14-3-1 of an ISE adaptor, a second part 14-3-2 of an ISE adaptor 14-3 and a protrusion 14-3-3.

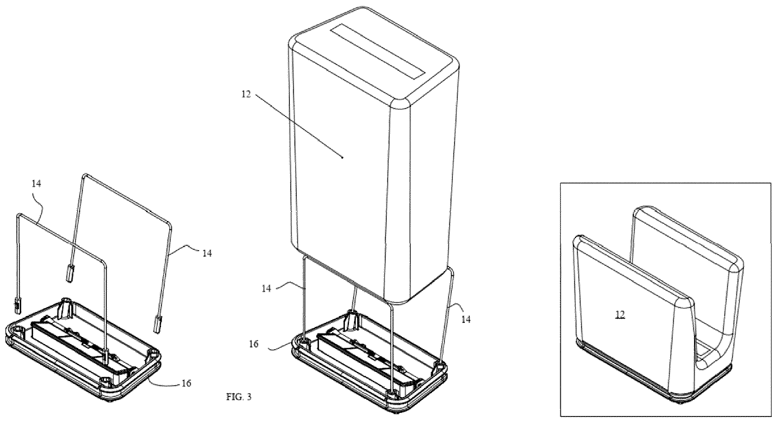

Figure 3 illustrates an example of different steps (from left to right) of an assembly of a detachable filtering unit and shows (a) ISEs 14 having ISE adaptors that are inserted into ISE interfaces of a filtering unit base 16, (b) a filter bag 12 that is placed on ISEs.

Figure 4 illustrates an example of different steps of an insertion of the detachable filtering unit into a PCR 100. In this figure the detachable exterior cage 18 is inserted into the PCR before the insertion of the filter bag 12, ISE 14, and filtering unit base 16.

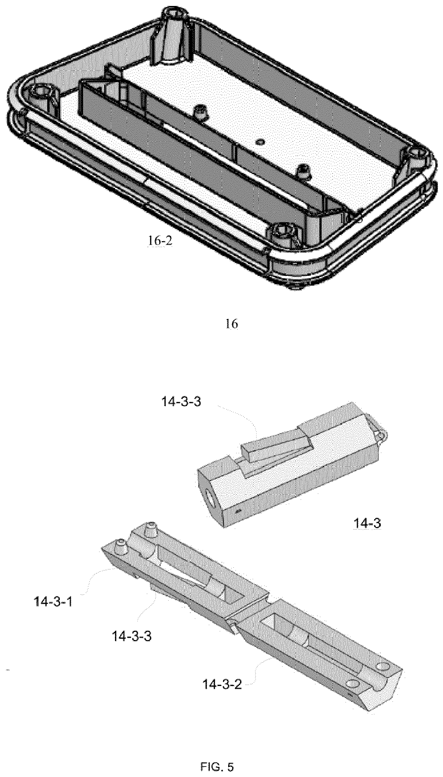

Figure 5 illustrates an example of filtering unit base 16 including bottom 16-3 and fluid opening 16-2. Figure 5 also illustrates an open and a closed (once assembled) ISE adaptor 14-3 - that include a first part 14-3-1, a second part 14-2 and a protrusion 14-3.

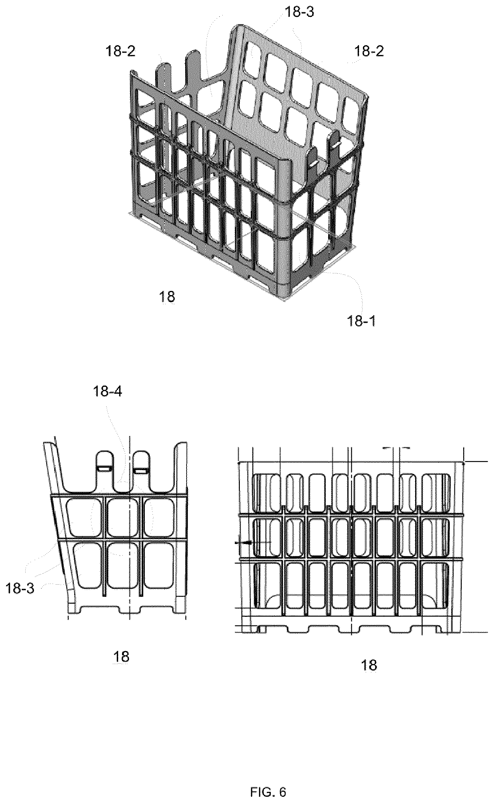

Figure 6 illustrates an example of detachable exterior cage 18 that has lower opening 18-1 and perforated sidewalls 18-2 (having openings 18-3). An external handle 18-4 may be formed from an opening and its surroundings.

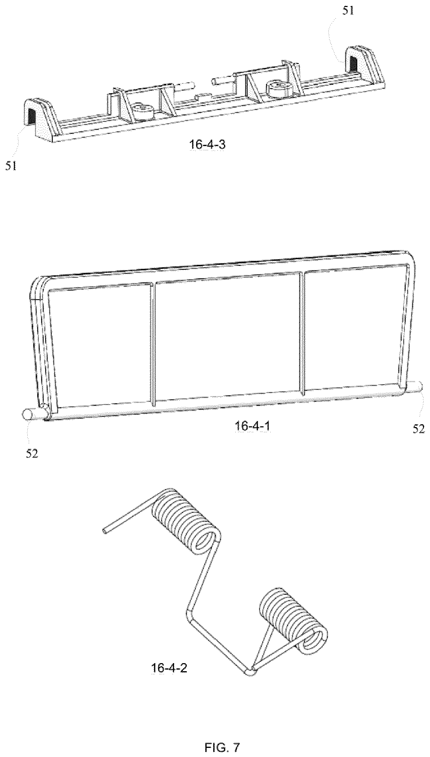

Figure 7 illustrates an example of valve closing element 16-4-1 that may be two side axes, spring 16-4-2 and valve base 16-4-3 that has openings in which the two side axes may fit - to allow the rotation of the valve closing elements 16-4-1 in relation to the valve base 16-4-3.

Figure 8 illustrates an example of an experimental set up that includes PCR 100 and the detachable exterior cage 18 that is being inserted to the PCR before the filter bag and other elements of the detachable filtering unit are inserted to the PCR.

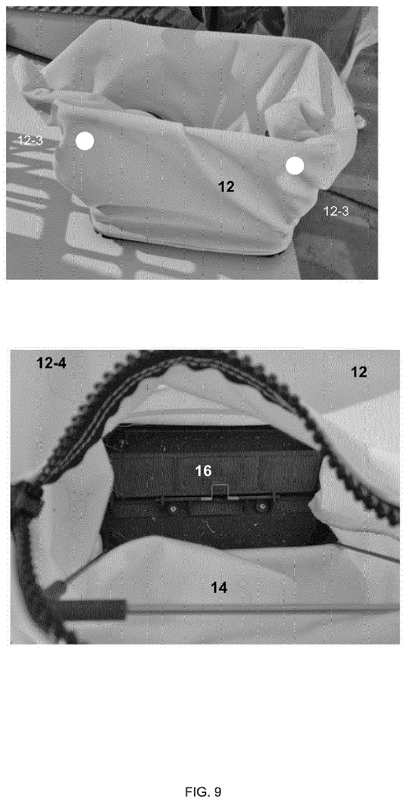

Figure 9 illustrates an example of filtering bag 12 (supported by ISE (not shown)) that is connected to filtering base unit (not shown), whereas the filtering bag includes fir extraction openings 12-3.

Figure 9 also illustrates an opened filtering bag 12 that exposes the filtering unit base 16, ISE 14 and filter bag closing element 12-4.

Components of the detachable filtering unit 10 have the following reference numbers:
a. Filter bag 12.
   i.Filter bag opening 12-1
   ii.Filter bag closing element 12-2.
   iii.Air extraction opening 12-3.
   iv.Filter bag closing element 12-4.
b. Interior supporting element (ISE) 14.
   i.Upper bar 14-1.
   ii. Supporting bars 14-2.
   iii.ISE adaptor 14-3.
      1. ISE adaptor - first part 14-3-1.
      2. ISE adaptor - second part 14-3-2.
      3. ISE adaptor - protrusion 14-3-3.
c. Filtering unit base 16
   i.ISE interface 16-1.
      1. ISE interface elements 16-1-1 - 16-1-4
   ii.Fluid opening 16-2
   iii. Bottom 16-3.
   iv. Valve 16-4.
      1. Valve closing element 16-4-1
      2. Spring 16-4-2.
      3. Valve base 16-4-3.
d. Detachable exterior cage 18
   i.Lower opening 18-1.
   ii.Perforated sidewall 18-2.
   iii.Opening 18-3.
   iv.Exposed handle 18-4.
e. Fastening elements - 19

Any reference to any one of "including" or "comprising" or "having" may be applied mutatis mutandis to any one of "consisting" and "consisting essentially of". For example- any method may include at least the steps included in the figures and/or in the specification, only the steps included in the figures and/or the specification. The same applies to the pool cleaning robot and the mobile computer.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

In the foregoing specification, the invention has been described with reference to specific examples of embodiments of the invention. It will, however, be evident that various modifications and changes may be made therein without departing from the broader spirit and scope of the invention as set forth in the appended claims.

Moreover, the terms "front, " "back, " "top, " "bottom, " "over, " "under " and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. Alternatively, the examples may be implemented as any number of separate integrated circuits or separate devices interconnected with each other in a suitable manner.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one as or more than one. Also, the use of introductory phrases such as "at least one " and "one or more " in the claims should not be construed to imply that the introduction of another claim element by the indefinite articles "a " or "an " limits any particular claim containing such introduced claim element to inventions containing only one such element, even when the same claim includes the introductory phrases "one or more " or "at least one " and indefinite articles such as "a " or "an. " The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements the mere fact that certain measures are recited in mutually different claims does not indicate that a combination of these measures cannot be used to advantage.

Any system, apparatus or device referred to this patent application includes at least one hardware component.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A detachable filtering unit, comprising:
a filter bag;
at least one interior supporting element (ISE) that is configured to contact one or more interior regions of the filter bag and to support the filter bag; and
a filtering unit base that comprises an ISE interface, a fluid opening; wherein the at least one ISE is configured to be detachable coupled to the ISE interface.

2. The detachable filtering unit according to claim 1, comprising a detachable exterior cage that at least partially surround the filter bag, once the detachable filtering unit is assembled, wherein the detachable exterior cage is not used for filtering.

3. The detachable filtering unit according to claim 2, wherein the detachable exterior cage has a lower opening, wherein a bottom of the filtering unit base is configured not to pass through the lower opening, when the detachable filtering unit is assembled.

4. The detachable filtering unit according to any claim of claims 2-4, wherein the detachable exterior cage comprises at least one exposed handle, wherein an exposed handle is a handle that is not in contact with the filter bag, when the detachable filtering unit is assembled and the filter bag is at least half empty.

5. The detachable filtering unit according to any claim of claims 2-4, wherein the detachable exterior cage is configured to be installed within an inner space of a pool cleaning robot independently from other components of the detachable filtering unit.

6. The detachable filtering unit according to any claim of claims 2-5, wherein the detachable exterior cage consists essentially of a perforated body that has openings of size that are at least twenty times a size of filtering openings of the filtering unit.

7. The detachable filtering unit according to any claim of claims 2-6, wherein the detachable exterior cage is not used for filtering.

8. The detachable filtering unit according to any of the preceding claims, wherein the at least one ISE comprises ISEs that are configured to support interior regions located at a top of the filter bag, wherein the ISEs are located at opposite sides of the filtering unit base, wherein each ISE of the ISEs has an upper bar that is supported by additional bars, wherein each ISE comprises ISE adaptors that are detachable coupled to the ISE interface, wherein an ISE adaptor comprises two parts that are rotatably coupled to each other and a protrusion that is oriented in relation to a longitudinal axis of the ISE adaptor.

9. The detachable filtering unit according to any of the preceding claims, wherein the filter bag comprises a filter bag opening and a filter bag closing element for selectively closing the filter bag opening, and wherein the filter bag closing element is a zipper or comprises a magnet.

10. The detachable filtering unit according to any of the preceding claims, wherein the filtering unit base comprises a valve for selectively closing the fluid opening, and wherein the value comprises a valve closing element, a spring, and a value base, wherein the closing element is rotatably coupled to the fluid base; and wherein the spring is configured to move the closing element to a closed position, and maintain the closing element at the closed position while an opening pressure applied on the closing element does not exceed a predefined opening pressure level.

11. The detachable filtering unit according to any of the preceding claims, wherein the filter bag comprises one or more air extraction openings.

12. The detachable filtering unit according to any of the preceding claims, wherein the detachable filtering unit is shaped and sized for being mounted from a top of the PCR.

13. The detachable filtering unit according to any of the preceding claims, wherein the detachable filtering unit is configured to emulate a detachable filtering unit cartridge.

14. The detachable filtering unit according to claim 1, wherein the detachable filtering unit consists essentially of the filter bag, the at least one ISE and the filtering unit base.

15. A pool cleaning platform (PRP) comprising:
a housing;
a cover that is configured to selectively expose and selectively close an inner space of the PRP;
a detachable filtering unit that is configured to enter the inner space;
wherein the detachable filtering unit comprises:
a filter bag;
at least one interior supporting element (ISE) that are configured to contact one or more interior regions of the filter bag and to support the filter bag;
a filtering unit base that comprises an ISE interface, a fluid opening, and a valve for selectively closing the fluid opening; wherein the at least one ISE are configured to be detachable coupled to the ISE interface;
a detachable exterior cage that is configured to delimit an expansion of the ISE within the PRP, once the detachable filtering unit is assembled and position within the inner space.
